# EUROPEAN PATENT APPLICATION

(11) **EP 3 001 054 A1**
(43) Date of publication of application: **30.03.2016**
(21) Application number: 14801201.6
(22) Date of filing: 20.05.2014
(51) Int. Cl.: F16C 33/46, F16C 19/36, F16C 33/58, F16C 33/66, F16C 19/22

(54) **CONICAL ROLLER BEARING**

(30) Priority: 23.05.2013 JP 2013108854
(71) Applicant: NTN Corporation, Osaka-shi, Osaka 550-0003 (JP)
(72) Inventor: YAGI Takashi, Kuwana-shi Mie 511-0811 (JP); MIYAZAKI Hiroyuki, Kuwana-shi Mie 511-0811 (JP)
(74) Representative: Grünecker Patent- und Rechtsanwälte PartG mbB
(86) International application number: PCT/JP2014/063330
(87) International publication number: WO 2014/189042

(57) **Abstract**

A tapered roller bearing is provided in which an inner race is not formed with a large flange so as to allow an increase in the load carrying capacity. In the above mentioned tapered roller bearing (1), a larger diameter ring portion (8) of a retainer (7) is configured such that, of the forces acting from an inner race (4) and an outer race (5) of the tapered roller bearing (1) onto the tapered rollers (6), the components directed from the smaller diameter side to the larger diameter side of tapered rollers (6) are received by the larger diameter ring portion (8), and the movement of the tapered rollers (6) toward the larger diameter side of the inner race (4) can be restricted due to the rigidity of the larger diameter ring portion (8) of the retainer (7). This eliminates the need to provide a large flange on the inner race (4) of the tapered roller bearing (1), so that the length of the tapered rollers (6) can be elongated, thereby allowing for an increase in the load carrying capacity of the bearing.

## Description

### TECHNICAL FIELD

The present invention relates to a tapered roller bearing including an inner race which is not formed with a large flange.

### BACKGROUND ART

In industrial rolling bearings to which large moment loads are applied and which are thus required to have a high rigidity, such as those used in industrial robots, a high load carrying capacity in both the radial and the axial directions, and a capability to be used in a preloaded state are required. In view of these conditions, the best choice for the rolling bearing to be used in industrial applications is a tapered roller bearing.

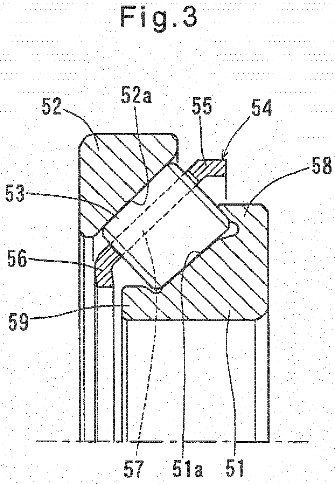

A common tapered roller bearing includes, as shown in FIG. 3, an inner race 51 provided with a tapered raceway 51 a at the outer peripheral surface thereof; an outer race 52 provided with a tapered raceway 52a at the inner peripheral surface thereof; a plurality of tapered rollers 53 received between the raceway 51a of the inner race 51 and the raceway 52a of the outer race 52; and a retainer 54 rollably retaining the tapered rollers 53. The retainer 54 comprises a larger diameter ring portion 55 and a smaller diameter ring portion 56 connected together through a plurality of column portions 57, with each tapered rollers 53 mounted between the adjacent pairs of the column portions 57. A large flange 58 is formed integrally with the end portion of the inner race 51 on the larger diameter side, and a small flange 59 is formed integrally with the end portion of the inner race 51 on the smaller diameter side, to prevent the tapered rollers 53 and the retainer 54 from falling off the inner race 51 (See FIGs. 8 to 10 in the below-identified Patent Document 1, for example).

### PRIOR ART DOCUMENTS

### PATENT DOCUMENTS

Patent Document 1 JP 4964696 B

### SUMMARY OF THE INVENTION

### PROBLEMS TO BE SOLVED BY THE INVENTION

In a conventional tapered roller bearing such as the one described above, the tapered rollers need to be formed such that the length thereof, with respect to the width dimension of the entire bearing, is shorter by the length of the large flange and the small flange, which, as a result, causes a problem of reduced load carrying capacity.

In contrast, Patent Document 1 proposes a double row tapered roller bearing in which the retainers and tapered rollers are disposed such that, when the retainers in the respective rows move toward the smaller diameter sides of the inner races, the retainers come into contact with each other to restrict the movement of the retainers and of the tapered rollers. With this arrangement, it is possible to eliminate the need to provide each inner race with a small flange and to elongate the length of the tapered rollers, thereby allowing for an increase in the load carrying capacity.

However, no proposal has ever been made regarding the technique to eliminate the need to provide the inner race of a tapered roller bearing with a large flange. This is because, when a force is applied from the inner race and the outer race of the tapered roller bearing to the tapered rollers, its component directed from the smaller diameter side to the larger diameter side of the tapered rollers, geometrically, is generated, and if the inner race is not provided with a large flange, the generated force causes the tapered rollers to move toward the larger diameter side of the inner race, resulting in a failure to function as a bearing.

Therefore, an object of the present invention is to provide a tapered roller bearing in which the inner race is not formed with a large flange so that the load carrying capacity can be increased.

### MEANS FOR SOLVING THE PROBLEMS

In order to solve the above mentioned problems, the present invention has adopted the following constitution.

A tapered roller bearing comprising:
an inner race provided with a tapered raceway at the outer peripheral surface thereof;
an outer race provided with a tapered raceway at the inner peripheral surface thereof;
a plurality of tapered rollers received between the raceway of the inner race and the raceway of the outer race; and
a retainer rollably retaining the tapered rollers;
wherein the retainer comprises a larger diameter ring portion and a smaller diameter ring portion connected together through a plurality of column portions, with each of the tapered rollers mounted between each of column portions; and
wherein the larger diameter ring portion of the retainer is configured such that, of forces acting from the inner race and the outer race onto the tapered rollers, components directed from the smaller diameter side toward the larger diameter side of the tapered rollers are received by the large diameter ring portion.

In other words, according to the above mentioned constitution, although the components directed from the smaller diameter side toward the larger diameter side of the tapered rollers act on the larger diameter ring portion of the retainer in a direction to increase its diameter, by increasing the rigidity of the larger diameter ring portion of the retainer to reduce the degree of deformation thereof, it is possible to restrict the movement of the tapered rollers toward the larger diameter side of the inner race. This eliminates the need to provide a large flange on the inner race, so that the length of the tapered rollers can be elongated, thereby allowing for an increase in the load carrying capacity of the bearing.

At this time, since sliding friction is generated between the larger diameter ring portion of the retainer and the end surfaces of the tapered rollers on the larger diameter side, the retainer is required to have properties such as high rigidity, low frictional coefficient, and high abrasion strength. Therefore, it is preferred that the retainer be made of a material such as brass, an iron-based material subjected to a surface treatment or a surface modification, a polyether ether ketone (PEEK) resin, or a polyphenylene sulfide (PPS) resin. As the surface treatment for the iron-based material, diamond-like carbon (DLC) plating, hard chromium plating, or phosphate coating can be used; and as the surface modification therefor, shot peening can be used.

Further, it is preferred that, the tapered roller bearing is arranged such that the surfaces of the larger diameter ring portion of the retainer and the tapered rollers that are in contact with each other form an angle of 40 to 50 degrees (preferably 45 degrees) with the center axis of a rotary shaft. This is because, as the angle is increased, the force acting on the larger diameter ring portion of the retainer in the direction to increase its diameter is decreased (the force to push retainer toward the larger diameter side of the inner race is increased), whereas as the angle is decreased, the distances by which the tapered rollers move toward the larger diameter side of the inner race, relative to radial deformation of the larger diameter ring portion, is increased.

In addition, it is preferred that the outer peripheral surface and the outer side surface of the larger diameter ring portion of the retainer are each provided with a lubricating oil groove which is opens at both ends thereof. With this arrangement, even if the space communicating the interior and the exterior of the tapered roller bearing is reduced as a result of increasing the sectional area of the larger diameter ring portion of the retainer in an effort to increase its rigidity, the circulating lubrication of the interior of the tapered roller bearing can be sufficiently carried out.

### EFFECT OF THE INVENTION

As described above, since in the tapered roller bearing according to the present invention, the larger diameter ring portion of the retainer is configured such that, of the forces acting on the tapered rollers, the component directed from the smaller diameter side toward the larger diameter side of the tapered rollers are received by the larger diameter ring portion, it is not necessary to provide a large flange on the inner race, which was in conventional tapered roller bearings, and to elongate the length of the tapered rollers, thereby allowing for an increase in the load carrying capacity. Further, since there is no need to provide a large flange on the inner race, a more cost effective production of the tapered roller bearing can be realized.

### BRIEF DESCRIPTION OF THE DRAWINGS

FIG. 1 is a longitudinal sectional view of a tapered roller bearing embodying the present invention, illustrating the state when it is mounted.
FIG. 2 is a perspective view of the main section of the tapered roller bearing shown in FIG. 1.
FIG. 3 is a longitudinal sectional view of a conventional tapered roller bearing.

### MODE FOR CARRYING OUT THE INVENTION

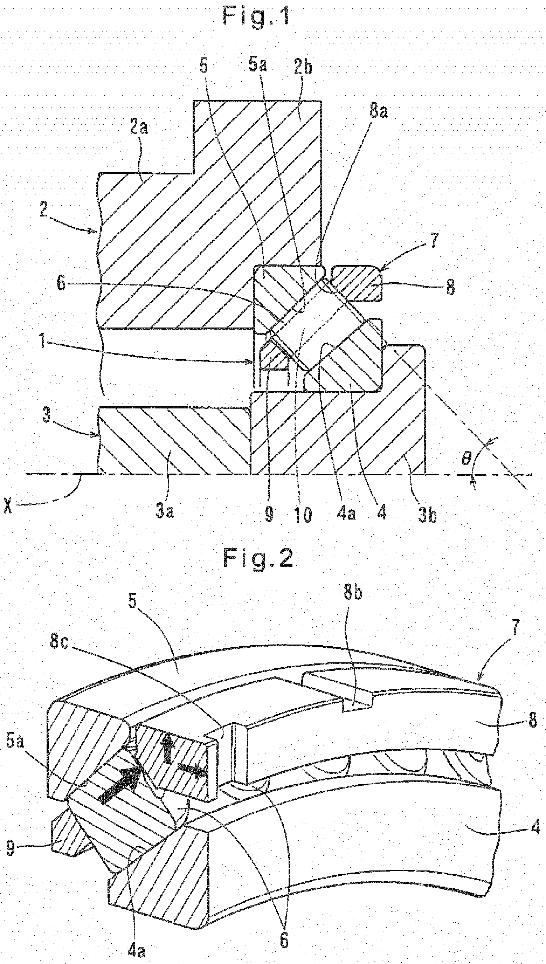

The present invention will now be described with reference to the drawings. FIG. 1 shows a tapered roller bearing 1 embodying the present invention, when it is mounted between a housing 2 and a rotary shaft 3. The tapered roller bearing 1 include: an inner race 4 provided with a tapered raceway 4a on the outer peripheral surface thereof; an outer race 5 provided with a tapered raceway 5a on the inner peripheral surface thereof; a plurality of tapered rollers 6 received between the raceway 4a of the inner race 4 and the raceway 5a of the outer race 5; and a retainer 7 rollably retaining the tapered rollers 6.

The housing 2 is a cylindrical member disposed radially outward of the rotary shaft 3, and includes a central portion 2a, and an end portion 2b having an inner diameter larger than that of the central portion 2a. The outer race 5 of the tapered roller bearing 1 is fitted to the inner peripheral surface of the end portion 2b, and the inner end surface of the outer race 5 is in abutment with a stepped surface defined between the central portion 2a and the end portion 2b.

The rotary shaft 3 includes a central portion 3a, and an end portion 3b having a flange. The end portion 3b is formed separately from the central portion 3a and coupled to the central portion 3a so as to rotate together with the central portion 3a. The inner race 4 of the tapered roller bearing 1 is fitted to the outer peripheral surface of the end portion 3b, and the outer end surface of the inner race 4 is in abutment with the inner side surface of the flange of the end portion 3b.

The retainer 7 is made of brass, and includes a larger diameter ring portion 8 and a smaller diameter ring portion 9 connected together through a plurality of column portions 10, and each of the tapered rollers 6 are mounted between an adjacent pair of the column portions 10. The larger diameter ring portion 8 has a roller receiving surface 8a and is configured such that, of the forces acting from the inner race 4 and the outer race 5 onto the tapered rollers 6 while the tapered roller bearing 1 is in use, the components directed from the smaller diameter toward the larger diameter side of the tapered rollers 6 are received by the roller receiving surfaces 8a. The larger diameter ring portion 8 has a sectional area larger than that of the larger diameter ring portion of a conventional tapered roller bearing (see FIG. 3).

Further, the tapered roller bearing 1 is designed such that the contact surfaces of the larger diameter ring portion 8 of the retainer 7 and the tapered rollers 6, in other words, the roller receiving surface 8a of the larger diameter ring portion 8 and the larger diameter end surfaces of the tapered rollers 6, form an angle θ of 40 to 50 degrees, preferably 45 degrees, with the center axis of the rotary shaft 3 (i.e., with line X shown in FIG. 1, which extends parallel to the center axis of the rotary shaft 3.

Further, as shown in FIG. 2, the outer peripheral surface of the larger diameter ring portion 8 of the retainer 7 is provided with a lubricating oil groove 8b extending in the axial direction and open at both ends thereof, and the outer side surface of the larger diameter ring portion 8 is provided with a lubricating oil groove 8c extending in the radial direction and open at both ends thereof.

Since in the tapered roller bearing 1, the larger diameter ring portion 8 of the retainer 7 is configured such that, of the forces acting from the inner race 4 and the outer race 5 onto the tapered rollers 6, the components directed from the smaller diameter toward the larger diameter side of the tapered rollers 6 are received by the larger diameter ring portion 8, with the retainer 7 being made of brass, and with the sectional area of the larger diameter ring portion 8 of the retainer 7 being increased in order to improve the rigidity of the larger diameter ring portion 8, the movement of the tapered rollers 6 toward the larger diameter side of the inner race 4 can be restricted due to the increased rigidity of the larger diameter ring portion 8 of the retainer 7, eliminating the need to provide the inner race 4 with a large flange. Therefore, the length of the tapered rollers can be increased compared to those of conventional tapered roller bearings, thereby allowing for an increase in the load carrying capacity.

Further, in this embodiment, since the tapered roller bearing 1 is designed such that the contact surfaces of the larger diameter ring portion 8 of the retainer 7 and the tapered rollers 6 form an angle of about 45 degrees with the central axis of the rotary shaft 3, it is possible to suitably reduce the magnitude of the force to push the retainer 7 toward the larger diameter side of the inner race 4, as well as the distances by which the tapered rollers 6 move toward the larger diameter side of the inner race 4, relative to radial deformation of the larger diameter ring portion 8, so that the movement of the tapered rollers 6 toward the larger diameter side of the inner race 4 can be securely restricted.

In addition, since the entire retainer 7 is made of brass, which has a high rigidity, a low frictional coefficient, and a high abrasion strength, it is possible not only to increase the rigidity of the larger diameter ring portion 8 of the retainer 7, but also to prevent an increased rotational torque due to sliding friction generated between the larger diameter ring portion 8 of the retainer 7 and the larger diameter end surfaces of the tapered rollers 6, and abrasion of these members, as a result of the sliding friction.

As the material for the retainer 7, in addition to brass, a material having properties such as a high rigidity, a low frictional coefficient, and a high abrasion strength can be preferably used. For example, an iron-based material subjected to a surface treatment such as DLC plating, hard chromium plating or phosphate coating, or a surface modification such as shot peening; a PEEK resin; or a PPS resin may be used.

Further, since the outer peripheral surface and the outer side surface of the larger diameter ring portion 8 of the retainer 7 are provided with the lubricating oil grooves 8b and 8c which are open at both ends thereof, respectively, even if the sectional area of the larger diameter ring portion 8 of the retainer 7 is increased, and the space communicating the interior and exterior of the tapered roller bearing 1 is reduced, compared to the conventional tapered roller bearing, the circulating lubrication of the interior of the tapered roller bearing 1 can be carried out sufficiently.

### DESCRIPTION OF SYMBOLS

- 1: tapered roller bearing
- 2: housing
- 3: rotary shaft
- 4: inner race
- 4a: raceway
- 5: outer race
- 5a: raceway
- 6: tapered rollers
- 7: retainer
- 8: larger diameter ring portion
- 8a: roller receiving surface
- 8b, 8c: lubricating oil grooves
- 9: smaller diameter ring portion
- 10: column portions

## Claims

1. A tapered roller bearing comprising:
an inner race provided with a tapered raceway on an outer peripheral surface thereof;
an outer race provided with a tapered raceway on an inner peripheral surface thereof;
a plurality of tapered rollers received between the raceway of the inner race and the raceway of the outer race; and
a retainer rollably retaining the tapered rollers;
wherein the retainer comprises a larger diameter ring portion and a smaller diameter ring portion that are connected together through a plurality of column portions, with each of the tapered rollers mounted between an adjacent pair of the column portions; and
wherein the larger diameter ring portion of the retainer is configured such that, of forces acting from the inner race and the outer race onto the tapered rollers, components directed from smaller diameter toward larger diameter sides of the tapered rollers are received by the large diameter ring portion.

2. The tapered roller bearing according to claim 1, wherein surfaces of the larger diameter ring portion of the retainer and the tapered rollers that are in contact with each other form an angle of 40 to 50 degrees with a center axis of a rotary shaft.

3. The tapered roller bearing according to claim 1 or 2, wherein the larger diameter ring portion of the retainer has an outer peripheral surface and an outer side surface each formed with a lubricating oil groove which is open at both ends thereof.
